# EUROPÄISCHE PATENTSCHRIFT

(11) **EP 3 078 445 B1**
(45) Veröffentlichungstag und Bekanntmachung des Hinweises auf die Patenterteilung: **21.08.2019**
(21) Anmeldenummer: 15163164.5
(22) Anmeldetag: 10.04.2015
(51) Int. Cl.: B23K 20/12, F16L 27/08, F16L 27/02, B23K 9/167, F16L 51/02, B23K 103/20, B23K 101/06

(54) **AUSGLEICHSELEMENT UND HERSTELLUNGSVERFAHREN DAFÜR**
COMPENSATING ELEMENT AND FABRICATING METHOD THEREOF
ÉLÉMENT DE COMPENSATION ET PROCÉDÉ DE FABRICATION ASSOCIÉ

(43) Veröffentlichungstag der Anmeldung: 12.10.2016
(73) Patentinhaber: MAGNA STEYR Fahrzeugtechnik AG & Co KG, 8041 Graz (AT)
(72) Erfinder: Friesenbichler, Thomas, 8020 Graz (AT); Stubenrauch, Martin, 8142 Wundschuh (AT)
(74) Vertreter: Zangger, Bernd

(56) Entgegenhaltungen:
- EP-A1- 0 519 636
- EP-A1- 2 006 591
- EP-A2- 1 002 982
- GB-A- 839 594
- GB-A- 1 278 063
- GB-A- 1 293 936
- GB-A- 1 390 821
- GB-A- 2 170 567
- US-A- 3 134 278
- US-A- 3 915 482

## Beschreibung

### Gebiet der Erfindung

Die vorliegende Erfindung betrifft ein Ausgleichselement zum Ausgleich von Längenänderungen und/oder Winkelversetzen in Rohrleitungen, sowie ein Verfahren zur Herstellung eines solchen Ausgleichselements.

### Stand der Technik

Ausgleichselement zum Ausgleich von Längenänderungen und/oder Winkelversetzen in Rohrleitungen sind an sich bekannt und dienen vor allem dem Ausgleich von Längenänderungen und Fehlausrichtungen in Rohrleitungen, wie sie zum Beispiel durch Temperaturunterschiede, Montagetoleranzen oder mechanische Belastungen entstehen können.

Derartige Ausgleichselemente werden insbesondere für kryogene Treibstoffleitungen, beispielsweise in Trägerraketen, verwendet.

Ein derartiges Kompensationselement, umfassend ein dünnwandiges Wellrohrteil und ein endseitig am Wellrohrteil angeordnetes, flanschartiges Anschlussteil, ist beispielsweise aus der WO 2008/154761 A1, der US3,915,482 oder der GB2170567A bekannt.

### Zusammenfassung der Erfindung

Es ist eine Aufgabe der Erfindung, ein Ausgleichselement anzugeben, dass die erforderlichen Ausgleiche durchführen kann, dabei aber mechanisch stabil und flexibel einsetzbar ist.

Eine weitere Aufgabe der Erfindung ist es ein einfaches Verfahren zur Herstellung eines solchen Ausgleichselements anzugeben.

Die Lösung der Aufgabe erfolgt durch ein Ausgleichselement zum Ausgleich von Längenänderungen und/oder Winkelversetzen in Rohrleitungen mit den technischen Merkmalen von Anspruch 1.

Erfindungsgemäß ist ein Ausgleichselement im Wesentlichen aus zwei Gehäusehälften aufgebaut, die einerseits durch einen Faltenbalg miteinander verbunden sind, andererseits aber zusätzlich durch miteinander verbundene Abstützabschnitte der Gehäusehälften auch mechanisch stabil verbunden sind. Die Abstützabschnitte können dabei Kräfte zumindest in einer Dimension abstützen, stellen eine mechanische Festigkeit also zumindest in einer Raumrichtung her, bevorzugt jedoch in zwei oder drei Dimensionen. Dabei sind die Abstützabschnitte radial außerhalb von Zungen ausgebildet, die selbst der sicheren Befestigung eines Faltenbalgs dienen. Die für die Anbindung des Faltenbalgs eingerichteten Zungen können mit den, üblicherweise im Querschnitt runden Enden des Faltenbalgs optimal verschweißt werden. Durch die Verwendung von, von den Abstützabschnitten getrennt ausgebildeten, Zungen zur Anbindung des Faltenbalgs, können, insbesondere mittels an den Zungen angebrachter Zwischenelemente, auch unterschiedliche Materialien für Gehäusehälften einerseits und Faltenbalg andererseits eingesetzt werden und somit beispielsweise ein Aluminium-Stahl Übergang dargestellt werden.

Erfindungsgemäß sind die Zungen beider Gehäusehälften ringförmig ausgebildet, und entsprechend damit bevorzugt den Enden eines im Querschnitt runden Faltenbalgs.

Erfindungsgemäß ist der Faltenbalg an beiden Gehäusehälften an der jeweiligen Zunge mittelbar über einen Schweißring befestigt, also zwischen Zunge und Faltenbalg jeweils ein Schweißring angeordnet, wobei der Schweißring mit dem Faltenbalg und mit der Zunge verschweißt ist. Der Schweißring ist bevorzugt koaxial mit dem Ausgleichselement bzw. den mit dem Ausgleichselement zu verbindenden Rohrleitungen und dem Faltenbalg ausgerichtet.

Erfindungsgemäß ist der Schweißring mit der Zunge mittels Reibschweißen, nähmlich Rotationsreibschweißen verbunden. Auf diese Weise sind insbesondere auch unterschiedliche Materialien, wie Aluminium und Stahl, sicher miteinander fügbar.

Die Rotationsreibschweißung ist bevorzugt als Stumpfstoß oder als abgestufter Stoß ausgebildet.

Erfindungsgemäß bestehen die Gehäusehälften aus einem Leichtmetall, insbesondere aus Aluminium, um Gewicht einzusparen und mit ebenfalls leichten Aluminiumleitungen einfach verschweißt werden zu können. Der Faltenbalg besteht aber bevorzugt aus Stahl, insbesondere aus rostfreiem Stahl, um die erforderliche Festigkeit zu erreichen bzw. um das elastische Verformungsvermögen, beispielsweise auch bei Tieftemperaturen, zu gewährleisten. Gerade in dieser Kombination einer Leichtmetall-Gehäusehälfte mit einem Stahl-Faltenbalg ist es vorteilhaft wenn der Schweißring aus Stahl besteht. An den Stahl-Schweißring kann auf einfache und bekannte Weise der Stahl-Faltenbalg geschweißt werden und der Schweißring kann seinerseits, insbesondere mittels Reibschweißen, gut an die dafür vorgesehenen Zungen der Gehäusehälften geschweißt werden.

Gemäß einer bevorzugten Ausführungsform sind die Abstützabschnitte der Gehäusehälften über einen Verbindungsring miteinander verbunden, wobei die Abstützabschnitte jeweils über zumindest einen Befestigungspunkt bevorzugt drehbar mit dem Verbindungsring verbunden sind. Der Verbindungsring ist wieder bevorzugt koaxial zum Ausgleichselement ausgerichtet und liegt somit parallel zu den gegebenenfalls vorhandenen Schweißringen.

Die Abstützabschnitte sind bevorzugt jeweils über zwei um 180 Grad zueinander versetzte Befestigungspunkte mit dem Verbindungsring verbunden, wobei die beiden Befestigungspunkte der ersten Gehäusehälfte zu den beiden Befestigungspunkten der zweiten Gehäusehälfte um 90 Grad versetzt sind, so dass die beiden Gehäusehälften mit dem Verbindungsring und den Befestigungspunkten ein Kardangelenk bilden.

Gemäß einer Ausführungsform können die Abstützabschnitte der Gehäusehälften einander axial überlappen.

Die Abstützabschnitte der Gehäusehälften sind bevorzugt axial zueinander verschiebbar miteinander verbunden. Hierdurch wird ein axialer Längenausgleich zwischen den befestigten Rohrleitungsenden ermöglicht.

Die Abstützabschnitte können insbesondere im Wesentlichen zylinderförmig ausgebildet sein, wobei die beiden Zylinder der Abstützabschnitte unterschiedliche Durchmesser aufweisen. Die alleinige Abstützung von Kräften durch die Abstützabschnitte kann bei einem Axial-Ausgleichselement oder Winkel-Axial-Ausgleichselement in der Form erfolgen, dass die beiden Abstützabschnitte wie zwei verschieden große Zylinder einander überlappend übereinandergeschoben sind, so dass der im Durchmesser kleinere an der Außenseite und der im Durchmesser größere an der Innenseite aneinander gleiten bzw. reiben und auf diese Weise Kräfte aufnehmen können.

Ein Verfahren zur Herstellung eines Ausgleichselements umfasst bevorzugt, dass auf die Zunge der ersten und/oder der zweiten Gehäusehälfte der Schweißring rotationsreibgeschweißt wird.

Nach dem Aufschweißen des Schweißrings werden bevorzugt der Schweißring und auch die Gehäusehälfte nachbearbeitet. Der Schweißring und/oder die Schweißnaht zwischen Zunge und Schweißring werden bevorzugt spanabhebend nachbearbeitet. Der Schweißring kann insbesondere so geometrisch verändert werden, insbesondere eine radial innen liegende Verdünnung ausgebildet werden, so dass ein Übergangsbereich zur späteren Verbindung mit dem Faltenbalg entsteht. Die Gehäusehälfte bzw. beide Gehäusehälften können stark nachbearbeitet werden, so dass sie erst jetzt ihre gewünschte Form erhalten.

Vorzugsweise werden nach dem Schweißen und gegebenenfalls nach dem Nachbearbeiten die beiden Schweißringe mit den Enden des Faltenbalgs verschweißt, insbesondere durch ein Schmelzschweißverfahren, vorzugsweise durch WIG-Schweißen (Wolfram-Inertgas-Schweißen).

### Kurzbeschreibung der Zeichnungen

Die Erfindung wird im Folgenden beispielhaft unter Bezugnahme auf die Zeichnungen beschrieben.
- Fig. 1: ist eine seitliche Schnittansicht eines erfindungsgemäßen Ausgleichselements.
- Fig. 2: ist eine Detaildarstellung des Bereiches A aus Fig. 1.
- Fig. 3, 4, 6 und 7: sind Schnittansichten die Verfahrensschritte eines erfindungsgemäßen Verfahrens zur Herstellung eines Ausgleichselements zeigen.
- Fig. 5: sind zwei alternative Detaildarstellungen des Bereiches B aus Fig. 4.

### Detaillierte Beschreibung der Erfindung

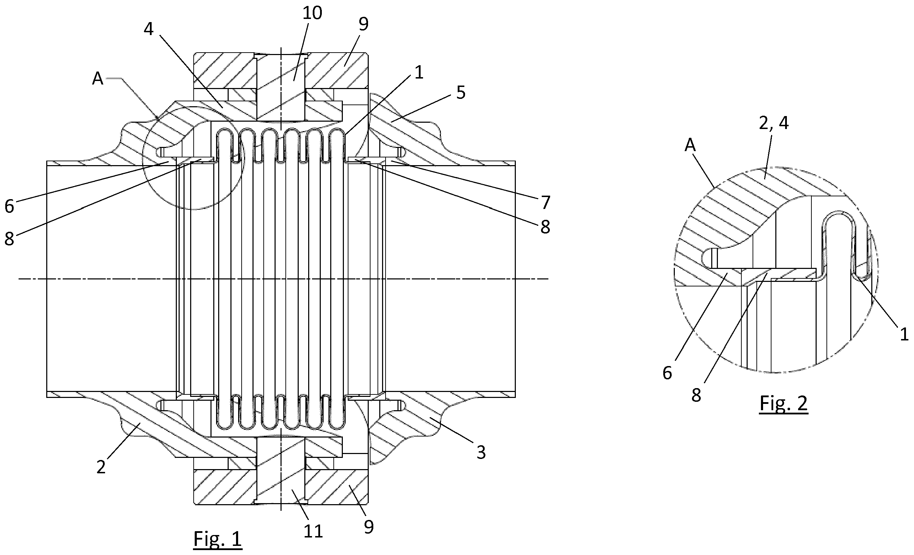

In Fig. 1, mit der Detaildarstellung des Bereiches A in Fig. 2, ist ein erfindungsgemäßes Ausgleichselement zum Ausgleich von Längenänderungen und/oder Winkelversetzen in Rohrleitungen dargestellt. Das Ausgleichselement umfasst zwei Gehäusehälften 2 und 3 aus Aluminium, wobei die Gehäusehälften 2, 3 im Wesentlichen einen Hohlzylinder bilden, so dass im Zentrum der Gehäusehälften ein Hohlraum zur Strömung eines Fluids bereitgestellt ist. An den äußeren Enden der Gehäusehälften 2, 3 kann jeweils eine (nicht dargestellte) Rohrleitung aus Aluminium angeschlossen, insbesondere angeschweißt werden.

Die Gehäusehälften 2, 3 weisen jeweils einen radial außen liegenden Abstützabschnitt 4, 5 auf, der beispielsweise um den gesamten Umfang der zylindrischen Gehäusehälfte umlaufen kann, oder auch beispielsweise als ein oder mehrere abstehende Arme ausgebildet sein kann, die nur Teile des Umfangs bedecken. Radial innerhalb der Abstützabschnitte 4, 5 sind an den Gehäusehälften 2, 3 Zungen 6, 7 als vollumfänglich verlaufende, kreisförmige Fortsätze ausgebildet. Die Zungen 6, 7 sind wie die Abstützabschnitte 4, 5 einstückig mit den jeweiligen Gehäusehälften 2, 3. An jeder Zunge 6, 7 ist über jeweils einen Schweißring 8 aus Stahl ein Ende eines Faltenbalgs 1, ebenfalls aus Stahl, verschweißt, so dass der Faltenbalg eine fluiddichte Verbindung zwischen erster und zweiter Gehäusehälfte 2, 3 herstellt. Der Faltenbalg 1 dient somit in erster Linie zum Dichten, die Abstützabschnitte 4, 5 dienen zum Abstützen von Kräften zwischen den Gehäusehälften 2, 3.

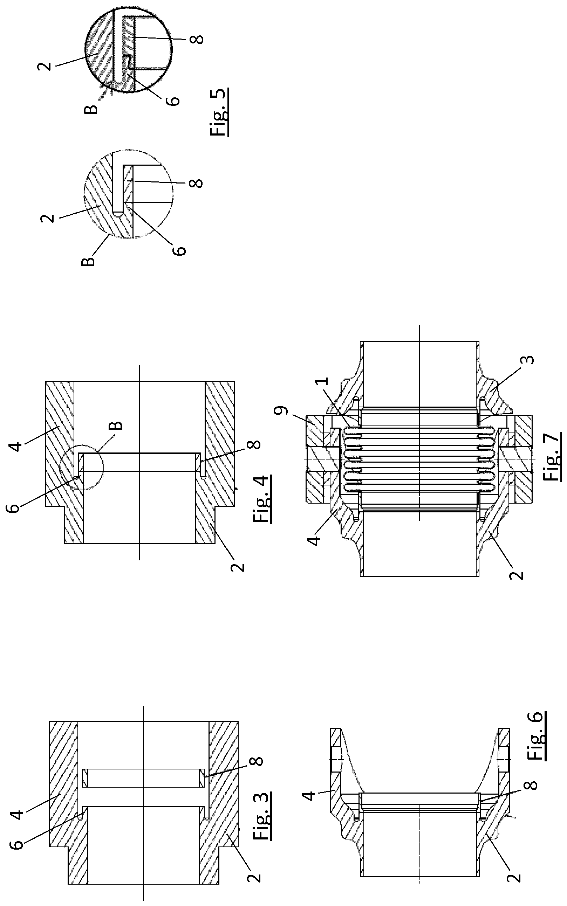

Die Verschweißung zwischen Faltenbalg 1, Schweißring 8 und Zunge 6 der ersten Gehäusehälfte 2 ist in Fig. 2 näher dargestellt. Der Schweißring 8 ist mit der Zunge 6 mittels Reibschweißen, nähmlich Rotationsreibschweißen, verbunden. Die Rotationsreibschweißung kann, wie in Fig. 2 und Fig. 5 links dargestellt, als Stumpfstoß oder, wie in Fig. 5 rechts dargestellt, als abgestufter Stoß ausgebildet sein.

An das andere Ende des Schweißringes 8 ist der Faltenbalg 1 geschweißt. Dazu ist der Schweißring 8 an der Innenseite abgeflacht, an welcher auch das Ende des Faltenbalgs 1 verschweißt wird, so dass der Faltenbalg 1 eben zum Schweißring 8 übergeht.

Die Abstützabschnitte 4, 5 der Gehäusehälften 2, 3 sind über einen gemeinsamen Verbindungsring 9 miteinander verbunden, der koaxial zur Hohlzylinderform des Ausgleichselements in der Mitte zwischen den beiden Gehäusehälften 2, 3 angeordnet ist. Die Abstützabschnitte 4, 5 sind jeweils über zwei um 180 Grad versetzte Befestigungspunkte 10, 11, beispielsweise drehbar gelagerte Bolzen, drehbar mit dem Verbindungsring 9 verbunden. In Fig. 1 sind die Befestigungspunkte 10, 11 zwischen dem Abstützabschnitt 4 der ersten Gehäusehälfte 2 und dem Verbindungsring 9 sichtbar. Entsprechende Befestigungspunkte für den Abstützabschnitt 5 der zweiten Gehäusehälfte 3 würden vor und hinter dem Faltenbalg 1 liegen und sind daher in Fig. 1 nicht sichtbar.

Die beiden Gehäusehälften 2, 3 bilden mit dem Verbindungsring 9 und den Befestigungspunkten 10, 11 ein Kardangelenk.

In einer anderen, nicht dargestellten, Ausführungsform könnten die Abstützabschnitte 4, 5 der Gehäusehälften 2, 3 einander axial überlappen und dabei axial zueinander verschiebbar sein, so dass zwischen den Gehäusehälften 2, 3 ein Längenausgleich ermöglicht wäre.

Ein Verfahren zur Herstellung eines erfindungsgemäßen Ausgleichselements ist in den Fig. 3 bis 7 dargestellt.

Wie in Fig. 3 dargestellt, wird zunächst eine vorbearbeitete Aluminium-Gehäusehälfte 2 bereitgestellt, die bereits eine radial innen liegende umlaufende Zunge 6 aufweist, wodurch das Anschweißen eines ebenfalls bereitgestellten Schweißringes 8 aus Stahl mittels Rotationsreibschweißen ermöglicht wird. Fig. 4 zeigt die Gehäusehälfte 2 nach dem Anschweißen des Schweißringes 8. Wie in Fig. 5 dargestellt, kann die Rotationsreibschweißung als Stumpfstoß (links) oder abgestuft (rechts) ausgeführt werden. Dieser Vorgang kann insbesondere mit einem Spezialwerkzeug ausgeführt werden, mittels welchem der Schweißring 8 in die Gehäusehälfte 2 rotationsreibgeschweißt wird.

Wie in Fig. 6 dargestellt, wird die Gehäusehälfte 2 nach dem Schweißen in die endgültige Form gebracht und auch der Schweißring 8 spanabhebend nachbearbeitet.

Nun kann ein Faltenbalg 1, insbesondere aus rostfreiem Stahl, an den Schweißring 8 WIG-geschweißt werden (Fig. 7). Hierbei kann die Gehäusehälfte 2 gekühlt werden um eine Überhitzung an der Schweißzone der beiden unterschiedlichen Materialien zu vermeiden. Am zweiten Ende wird der Faltenbalg 1 mit dem Schweißring 8 der zweiten Gehäusehälfte 3 WIG-geschweißt. Danach werden die beiden Gehäusehälften 2, 3 noch über die Abstützabschnitte 4, 5, Verbindungsring 9 und Befestigungspunkte 10, 11 verbunden um das fertige Ausgleichselement als Kardangelenk zu bilden.

### Bezugszeichenliste

- 1: Faltenbalg
- 2: erste Gehäusehälfte
- 3: zweite Gehäusehälfte
- 4: Abstützabschnitt
- 5: Abstützabschnitt
- 6: Zunge
- 7: Zunge
- 8: Schweißring
- 9: Verbindungsring
- 10: Befestigungspunkt

## Patentansprüche

1. Ausgleichselement zum Ausgleich von Längenänderungen und/oder Winkelversetzen in Rohrleitungen, umfassend zwei Seitenteile, wobei jedes Seitenteil zur Verbindung mit einem Ende einer Rohrleitung vorgesehen ist, weiter umfassend einen an beiden Seitenteilen befestigten Faltenbalg (1), wobei die zwei Seitenteile durch eine erste Gehäusehälfte (2) und eine zweite Gehäusehälfte (3) gebildet werden, wobei beide Gehäusehälften (2, 3) jeweils einen radial außen liegenden Abstützabschnitt (4, 5) aufweisen und eine radial innen liegende Zunge (6, 7) aufweisen, wobei der Faltenbalg (1) an beiden Gehäusehälften (2, 3) an der jeweiligen Zunge (6, 7) mittelbar befestigt ist, wobei, zusätzlich zur Verbindung der beiden Gehäusehälften (2, 3) über den Faltenbalg (1), die Abstützabschnitte (4, 5) beider Gehäusehälften (2, 3) miteinander verbunden sind, so dass sie Kräfte abstützen können, wobei die Zungen (6, 7) ringförmig ausgebildet sind, **dadurch gekennzeichnet, dass** die Gehäusehälften (2, 3) aus einem Leichtmetall bestehen, wobei der Faltenbalg (1) an beiden Gehäusehälften (2, 3) an der jeweiligen Zunge (6, 7) mittelbar über einen Schweißring (8) befestigt ist, wobei der Schweißring (8) mit dem Faltenbalg (1) und mit der Zunge (6, 7) verschweißt ist, wobei der Schweißring (8) mit der Zunge (6, 7) mittels Reibschweißen, nämlich Rotationsreibschweißen verbunden ist.

2. Ausgleichselement nach Anspruch 1,
**dadurch gekennzeichnet, dass** die Rotationsreibschweißung als Stumpfstoß oder als abgestufter Stoß ausgebildet ist.

3. Ausgleichselement nach zumindest einem der vorhergehenden Ansprüche,
**dadurch gekennzeichnet , dass** die Gehäusehälften (2, 3) aus Aluminium bestehen und/oder dass der Schweißring (8) aus Stahl besteht und/oder dass der Faltenbalg (1) aus Stahl besteht.

4. Ausgleichselement nach zumindest einem der vorhergehenden Ansprüche,
**dadurch gekennzeichnet , dass** die Abstützabschnitte (4, 5) der Gehäusehälften (2, 3) über einen Verbindungsring (9) miteinander verbunden sind, wobei die Abstützabschnitte (4, 5) jeweils über zumindest einen Befestigungspunkt (10, 11) drehbar mit dem Verbindungsring (9) verbunden sind.

5. Ausgleichselement nach Anspruch 4,
**dadurch gekennzeichnet , dass** die Abstützabschnitte (4, 5) jeweils über zwei um 180 Grad versetzte Befestigungspunkte (10, 11) mit dem Verbindungsring (9) verbunden sind, wobei die beiden Befestigungspunkte (10, 11) der ersten Gehäusehälfte (2) zu den beiden Befestigungspunkten der zweiten Gehäusehälfte (3) um 90 Grad versetzt sind, so dass die beiden Gehäusehälften (2, 3) mit dem Verbindungsring (9) und den Befestigungspunkten (10, 11) ein Kardangelenk bilden.

6. Ausgleichselement nach zumindest einem der vorhergehenden Ansprüche,
**dadurch gekennzeichnet, dass** die Abstützabschnitte (4, 5) der Gehäusehälften (2, 3) einander axial überlappen.

7. Ausgleichselement nach zumindest einem der vorhergehenden Ansprüche,
**dadurch gekennzeichnet, dass** die Abstützabschnitte (4, 5) der Gehäusehälften (2, 3) axial zueinander verschiebbar miteinander verbunden sind.

8. Verfahren zur Herstellung eines Ausgleichselements nach zumindest einem der vorhergehenden Ansprüche,
**dadurch gekennzeichnet, dass** auf die Zunge (6, 7) der ersten und/oder der zweiten Gehäusehälfte (2, 3) der Schweißring (8) rotationsreibgeschweißt wird.

9. Verfahren nach Anspruch 8,
**dadurch gekennzeichnet, dass** nach dem Schweißen der Schweißring (8) und/oder die Gehäusehälfte (2, 3) nachbearbeitet werden.

10. Verfahren nach Anspruch 8 oder 9,
**dadurch gekennzeichnet, dass** nach dem Schweißen und gegebenenfalls nach dem Nachbearbeiten die beiden Schweißringe (8) mit den Enden des Faltenbalgs (1) verschweißt werden, vorzugsweise durch ein Schmelzschweißverfahren wie WIG-Schweißen.

## Claims

1. Compensating element for compensating for changes in length and/or angular offsetting in pipelines, comprising two lateral parts, wherein each lateral part is provided for connecting to one end of a pipeline, further comprising a bellows (1) which is fastened to both lateral parts, wherein the two lateral parts are formed by a first housing half (2) and a second housing half (3), wherein both housing halves (2, 3) each have a radially outer supporting portion (4, 5) and a radially inner tongue (6, 7), wherein the bellows (1) is indirectly fastened to both housing halves (2, 3) at the respective tongue (6, 7), wherein, in addition to the connection of the two housing halves (2, 3) via the bellows (1), the supporting portions (4, 5) of both housing halves (2, 3) are connected to one another, with the result that they can support forces, wherein the tongues (6, 7) are of annular design, **characterized in that** the housing halves (2, 3) consist of a light metal, wherein the bellows (1) is indirectly fastened to both housing halves (2, 3) at the respective tongue (6, 7) via a welding ring (8), wherein the welding ring (8) is welded to the bellows (1) and to the tongue (6, 7), wherein the welding ring (8) is connected to the tongue (6, 7) by means of friction welding, namely spin friction welding.

2. Compensating element according to Claim 1, **characterized in that** the spin friction welding is designed to produce a butt joint or a lap joint.

3. Compensating element according to at least one of the preceding claims,
**characterized in that** the housing halves (2, 3) consist of aluminium and/or **in that** the welding ring (8) consists of steel and/or **in that** the bellows (1) consists of steel.

4. Compensating element according to at least one of the preceding claims,
**characterized in that** the supporting portions (4, 5) of the housing halves (2, 3) are connected to one another via a connecting ring (9), wherein the supporting portions (4, 5) are each rotatably connected to the connecting ring (9) via at least one fastening point (10, 11).

5. Compensating element according to Claim 4,
**characterized in that** the supporting portions (4, 5) are each connected to the connecting ring (9) via two fastening points (10, 11) which are offset by 180 degrees, wherein the two fastening points (10, 11) of the first housing half (2) are offset by 90 degrees with respect to the two fastening points of the second housing half (3), with the result that the two housing halves (2, 3) form a universal joint with the connecting ring (9) and the fastening points (10, 11).

6. Compensating element according to at least one of the preceding claims,
**characterized in that** the supporting portions (4, 5) of the housing halves (2, 3) axially overlap one another.

7. Compensating element according to at least one of the preceding claims,
**characterized in that** the supporting portions (4, 5) of the housing halves (2, 3) are connected to one another so as to be axially displaceable with respect to one another.

8. Method for fabricating a compensating element according to at least one of the preceding claims,
**characterized in that** the welding ring (8) is spinfriction-welded onto the tongue (6, 7) of the first and/or of the second housing half (2, 3).

9. Method according to Claim 8,
**characterized in that** the welding ring (8) and/or the housing half (2, 3) are/is post-processed after the welding operation.

10. Method according to Claim 8 or 9,
**characterized in that**, after the welding operation and, where appropriate, after the post-processing, the two welding rings (8) are welded to the ends of the bellows (1), preferably by a fusion welding method such as WIG welding.

## Revendications

1. Élément de compensation destiné à compenser des variations de longueur et/ou des décalages angulaires dans des conduits tubulaires, l'élément de compensation comprenant deux parties latérales, chaque partie latérale étant prévue pour être raccordée à une extrémité d'une conduite tubulaire, et comprenant en outre un soufflet (1) fixé aux deux parties latérales, les deux parties latérales étant formées par une première moitié de boîtier (2) et une deuxième moitié de boîtier (3), les deux moitiés de boîtier (2, 3) comportant chacune une portion de support radialement extérieure (4, 5) et une languette radialement intérieure (6, 7), le soufflet (1) étant fixé indirectement aux deux moitiés de boîtier (2, 3) au niveau de la languette respective (6, 7), les portions de support (4, 5) des deux moitiés de boîtier (2, 3) étant reliées entre elles, en plus de la liaison des deux moitiés de boîtier (2, 3) par le soufflet (1), de manière à pouvoir supporter des forces, les languettes (6, 7) étant conçues pour être annulaires, **caractérisé en ce que** les moitiés de boîtier (2, 3) sont en un métal léger, le soufflet (1) étant fixé aux deux moitiés de boîtier (2, 3) au niveau de la languette respective (6, 7) indirectement par un anneau de soudage (8), l'anneau de soudage (8) étant soudé au soufflet (1) et à la languette (6, 7), l'anneau de soudage (8) étant relié à la languette (6, 7) par soudage par friction, à savoir par soudage par friction et rotation.

2. Élément de compensation selon la revendication 1, **caractérisé en ce que** la soudure obtenue par soudage par friction et rotation se présente sous la forme d'un joint bout à bout ou d'un choc graduel.

3. Élément de compensation selon au moins l'une des revendications précédentes,
**caractérisé en ce que** les moitiés de boîtier (2, 3) sont en aluminium et/ou que l'anneau de soudage (8) est en acier et/ou le soufflet (1) est en acier.

4. Élément de compensation selon au moins l'une des revendications précédentes,
**caractérisé en ce que** les portions de support (4, 5) des moitiés de boîtier (2, 3) sont reliées l'une à l'autre par une bague de liaison (9), les portions de support (4, 5) étant reliées de manière rotative à la bague de liaison (9) par au moins un point de fixation (10, 11).

5. Élément de compensation selon la revendication 4,
**caractérisé en ce que** les portions de support (4, 5) sont chacune reliées à la bague de liaison (9) par deux points de fixation (10, 11) décalés de 180 degrés, les deux points de fixation (10, 11) de la première moitié de boîtier (2) étant décalés de 90 degrés par rapport aux deux points de fixation de la deuxième moitié de boîtier (3) de manière à ce que les deux moitiés de boîtier (2, 3) forment avec la bague de liaison (9) et les points de fixation (10, 11) un joint universel.

6. Élément de compensation selon l'une au moins des revendications précédentes,
**caractérisé en ce que** les portions de support (4, 5) des moitiés de boîtier (2, 3) se chevauchent axialement.

7. Élément de compensation selon au moins l'une des revendications précédentes,
**caractérisé en ce que** les portions de support (4, 5) des moitiés de boîtier (2, 3) sont reliées entre elles de manière à pouvoir se déplacer axialement l'une par rapport à l'autre.

8. Procédé de fabrication d'un élément de compensation selon l'une au moins des revendications précédentes,
**caractérisé en ce que** la languette (6, 7) de la première et/ou de la deuxième moitié de boîtier (2, 3) de l'anneau de soudage (8) est soudée par friction et rotation.

9. Procédé selon la revendication 8,
**caractérisé en ce que**, après soudage, l'anneau de soudage (8) et/ou la moitié de boîtier (2, 3) sont réusinés.

10. Procédé selon la revendication 8 ou 9,
**caractérisé en ce que**, après le soudage et éventuellement après le ré-usinage, les deux anneaux de soudage (8) sont soudés aux extrémités du soufflet (1), de préférence par un procédé de soudage par fusion tel que le soudage TIG.
